# FASCICULE DE BREVET EUROPEEN

(11) **EP 1 819 534 B1**
(45) Date de publication et mention de la délivrance du brevet: **09.03.2011**
(21) Numéro de dépôt: 05816113.4
(22) Date de dépôt: 02.12.2005
(51) Int. Cl.: B60C 23/20

(54) **ELEMENT DE LA LIAISON AU SOL D'UN VEHICULE, PNEUMATIQUE ET UTILISATION D'UN SYSTEME DE MESURE.**
ELEMENT FÜR EINEN FAHRZEUGKONTAKT MIT DEM BODEN, REIFEN UND VERWENDUNG EINES MESSSYSTEMS
ELEMENT FOR A VEHICLE CONTACT WITH GROUND, TIRE AND USE OF A MEASURING SYSTEM

(30) Priorité: 02.12.2004 FR 0412829
(43) Date de publication de la demande: 22.08.2007
(73) Titulaire: Société de Technologie Michelin, 63000 Clermont-Ferrand (FR); Michelin Recherche et Technique S.A., 1763 Granges-Paccot (CH)
(72) Inventeur: FAGOT-REVURAT,Lionel, FR-63260 Ussel de Vensat (FR); PROST, Pascal, F-63200 RIOM (FR)
(74) Mandataire: Le Cam, Stéphane Georges Elie
(86) Numéro de dépôt international: PCT/EP2005/056406
(87) Numéro de publication internationale: WO 2006/058916

(56) Documents cités:
- US-A1- 2002 121 132
- US-A1- 2003 021 330

## Description

La présente invention concerne un élément de la liaison au sol d'un véhicule constitué pour parties de masses polymériques et plus spécifiquement elle concerne un pneumatique. L'invention concerne encore l'utilisation d'un système de mesure de la température sans fil dans un tel élément de la liaison au sol d'un véhicule.

L'invention se rapporte à des éléments de la liaison au sol de tout type de véhicule, tel que automobile, motocyclette, poids-lourds, engin agricole ou de génie civil.

Bien que non limité à une telle application, l'invention sera plus particulièrement décrite en référence à un pneumatique.

L'armature de renforcement ou renforcement des pneumatiques est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base, tels que les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage», pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

La direction longitudinale du pneumatique, ou direction circonférentielle, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

La direction transversale ou axiale du pneumatique est parallèle à l'axe de rotation du pneumatique.

Un plan radial contient l'axe de rotation du pneumatique.

Lors de l'utilisation d'un véhicule, les mélanges caoutchouteux formant les différentes parties du pneumatique telles que les zones basses, les flanc, la bande de roulement sont soumis à des sollicitations qui, combinées aux propriétés des matériaux, conduisent à une élévation de température des mélanges.

Il est connu de l'homme du métier que les propriétés physico-chimiques des mélanges caoutchouteux varient en fonction de la température et donc que la température a une influence sur les propriétés des différentes masses caoutchouteuses du pneumatique.

Ainsi, selon le type de pneumatique et son usage, certaines zones du pneumatique sont soumises à des contraintes telles que les températures atteintes peuvent conduire à des performances par exemple d'endurance ou d'usure du pneumatique qui ne sont pas optimales.

Par ailleurs, il est connu notamment du document EP 1275 949 d'implanter un capteur sans fil dans les pneumatiques pour déterminer des forces ou contraintes s'exerçant au sein du pneumatique.

Le document EP 0 937 615 décrit quant à lui l'utilisation de capteurs sans fil à onde acoustique de surface intégrés dans un pneumatique notamment pour la mesure de l'adhérence d'un pneumatique. Un tel capteur présente l'avantage de pouvoir être interrogé à distance, par onde radiofréquence, sans-fil, sans qu'une source d'énergie proche soit nécessaire. L'énergie de l'onde radio d'interrogation envoyée par un dispositif d'interrogation à distance est suffisante pour que le capteur envoie une onde radio modifiée en réponse. Le document US 2002/0121132 décrit également l'utilisation de capteur sans fil à onde acoustique de surface dans des pneumatiques.

L'invention a pour but de fournir un élément de la liaison au sol d'un véhicule, tel qu'un pneumatique, apte à communiquer avec un dispositif d'interrogation attaché au véhicule pour signaler une variation de température locale de zones de deux masses polymériques de l'élément de liaison au sol susceptible de conduire à une codification pertinente des performances dudit élément et ainsi aider le conducteur ou pilote du véhicule à adapter sa conduite aux conditions et ainsi optimiser les performances du pneumatique.

Ce but a été atteint selon l'invention par un élément de la liaison au sol d'un véhicule constitué pour partie de masses polymériques, au moins (deux) systèmes de mesure de la température sans fil par technologie à onde acoustique de surface ou onde acoustique de volume étant noyés dans des zones de deux masses polymériques susceptibles d'atteindre des températures supérieures à 100°C et/ou d'être influencée par des zones de masses polymériques environnantes susceptibles d'atteindre des températures supérieures à 100°C, lors de l'utilisation du véhicule, les directions de polarisation des antennes des systèmes de mesure formant entre elles un angle compris entre 30 et 90°.

Au sens de l'invention, l'utilisation du véhicule est réalisée à une température ambiante de l'ordre de 20°C.

Conformément à l'invention, la zone dans laquelle est noyé et/ou à proximité de laquelle au moins un système de mesure de la température sans fil par technologie à onde acoustique de surface ou onde acoustique de volume peut atteindre une température supérieure à 100°C dans des conditions qui peuvent s'écarter des conditions nominales d'utilisation. Il s'agit d'une zone pouvant par exemple atteindre de telles températures en cas de sursollicitations (c'est-à-dire de sollicitations allant au-delà des conditions nominales préconisées) d'un élément de la liaison au sol par un ou plusieurs paramètres auxquels il est soumis, tels que la vitesse, la charge ou la pression par exemple dans le cas d'un pneumatique.

Par exemple, un sous-gonflage d'un pneumatique, c'est-à-dire une pression du pneumatique inférieure à la pression nominale, d'un véhicule de tourisme peut conduire en roulage à un échauffement des épaules de celui-ci, c'est-à-dire des extrémités axialement extérieures de la bande de roulement. Le système de mesure de la température est alors avantageusement mis en place dans cette zone.

Selon un autre exemple, un sur-gonflage d'un pneumatique, c'est-à-dire une pression du pneumatique supérieure à la pression nominale, d'un véhicule de tourisme ou d'un poids lourd peut conduire en roulage à un échauffement du sommet de celui-ci, c'est-à-dire de la partie centrale de la bande de roulement. Le système de mesure de la température est alors avantageusement mis en place dans cette zone.

La mise en place du système de mesure dans une zone environnante ou à proximité de la zone susceptible d'atteindre des températures supérieures à 100°C est réalisée dès lors que l'homme du métier sait établir une fonction de transfert de la température entre ces deux zones, la mesure de la température de l'une des zones étant directement corrélée à celle de l'autre zone. Ces deux zones sont alors très proches. Une telle réalisation est notamment intéressante lorsque la zone considérée peut atteindre des températures relativement élevées et/ou peut être soumise à des sollicitations mécaniques importantes et susceptibles de détériorer le système de mesure.

Selon un mode de réalisation préféré de l'invention, le système de mesure de la température est noyé dans une zone d'une masse polymérique susceptible d'atteindre des températures supérieures à 110°C lors de l'utilisation du véhicule et de préférence encore supérieure à 150°C.

Durant les essais, il a été mis en évidence que les systèmes de mesure de la température sans fil par technologie à onde acoustique de surface ou onde acoustique de volume du type SAW (Surface Acoustic Wave) ou BAW (Bulk Acoustic Wave) autorise une mesure précise de la température locale, c'est-à-dire une mesure de la température du mélange polymérique directement dans leur voisinage.

Les capteurs de type SAW ou BAW présente également l'avantage comme évoqué précédemment de pouvoir être interrogé à distance par onde radio, sans qu'une source d'énergie proche leur soit nécessaire.

Ces capteurs autorisent en outre des mesures fréquentes et à haute vitesse, et assurent ainsi une information fréquente et rapide sur l'état des mélanges polymériques. Ils sont ainsi particulièrement bien adaptés à la mesure de température de mélanges caoutchouteux qui lorsqu'ils sont soumis à des sollicitations importantes ou de longue durée voient leur température augmentée lentement au début puis beaucoup plus rapidement sous la forme d'un emballement thermique.

Un autre avantage de ces capteurs est notamment lié à leurs faibles dimensions qui autorisent leur mise en place dans les zones mentionnées précédemment sans perturber le fonctionnement intrinsèque du pneumatique.

Selon un premier mode de réalisation de l'invention, l'élément, constitutif d'un ensemble monté comprenant une roue et un pneumatique, est une partie de la roue.

Selon un deuxième mode de réalisation de l'invention, l'élément, constitutif d'un ensemble monté comprenant une roue et un pneumatique, est une partie du pneumatique. L'élément est alors avantageusement inséré dans une masse caoutchouteuse constitutive du pneumatique ; selon la destination de ce pneumatique ou plus exactement le véhicule auquel il est destiné, l'élément sera noyé dans une masse caoutchouteuse de la bande de roulement, d'un flanc ou bien d'une zone basse.

Selon un troisième mode de réalisation de l'invention, l'élément, constitutif d'un ensemble monté comprenant une roue, un pneumatique et un organe de support du pneumatique pour une utilisation notamment en mode dégradé est une partie de l'organe de support.

Un tel organe de support est par exemple un appui sur le quel le pneumatique repose en cas de perte de pression ; un tel appui est par exemple décrit dans le document EP 0 314 988. Il peut encore s'agir d'un boudin mousse, tel que le produit commercialisé sous la marque « Bib mousse » par la société MICHELIN. Un tel élément remplit la cavité de l'ensemble monté ; il est notamment utilisé pour des véhicules de compétition en rallye. La connaissance de la température dans des zones prédéterminées de ces éléments peut donner une information soit sur l'état de l'ensemble monté soit sur l'état de l'élément lui-même.

Quel que soit le type d'élément de la liaison au sol considéré, les informations sur la température mesurées sont transmises par onde radio à un dispositif d'interrogation par exemple fixé sur le véhicule pour apporter des indications au conducteur du véhicule. Ces indications mises à disposition du conducteur peuvent lui permettre d'adapter la conduite du véhicule pour limiter l'échauffement constaté et ramener l'élément de la liaison au sol à des températures acceptables pour conserver ses performances.

Selon une variante de réalisation de l'invention selon laquelle au moins deux systèmes de mesure de la température sans fil par technologie à onde acoustique de surface ou onde acoustique de volume, comportant des antennes polarisées linéairement, sont noyés dans des zones de deux masses polymériques susceptibles d'atteindre des températures supérieures à 100°C et/ou d'être influencée par des zones de masses polymériques environnantes susceptibles d'atteindre des températures supérieures à 100°C lors de l'utilisation du véhicule, les directions de polarisation des antennes formant entre elles un angle compris entre 30 et 90°.

Les essais réalisés ont pu mettre en évidence que la communication entre un dispositif d'interrogation, par exemple associé au véhicule, et chacun des systèmes de mesure, notamment dans le cas de capteurs du type résonateur **SAW** ou **BAW**, nécessite une orientation correspondant à l'une ou l'autre des antennes des systèmes de mesure pour communiquer avec chacun. Une telle réalisation selon l'invention va ainsi permettre de recevoir les signaux réémis par chacun des systèmes de mesure, à l'aide soit de deux dispositifs d'interrogation soit d'un seul dispositif d'interrogation prévu pour recevoir des signaux réémis depuis des antennes dont les directions de polarisation sont différentes, en permettant ainsi de sélectionner le système de mesure. Une telle réalisation permet donc de connaître la température d'une zone définie dans le cas de deux systèmes de mesure placés dans des zones différentes. Il est en effet connu de l'homme du métier qu'il n'est pas possible de sélectionner un capteur du type résonateur **SAW** ou **BAW** à partir du signal qu'il réémet.

L'invention propose également un pneumatique comportant au moins une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement, les bourrelets, les flancs et la bande de roulement étant constitués pour partie de masses caoutchouteuse, au moins un système de mesure de la température sans fil par technologie à onde acoustique de surface ou onde acoustique de volume étant noyé dans une zone d'une masse caoutchouteuse susceptible d'atteindre des températures supérieures à 100°C et/ou d'être influencée par une zone d'une masse caoutchouteuse environnante susceptible d'atteindre des températures supérieures à 100°C, lors de l'utilisation du véhicule.

Selon un mode de réalisation préféré de l'invention, le système de mesure de la température est noyé dans une zone d'une masse caoutchouteuse susceptible d'atteindre des températures supérieures à 110°C lors de l'utilisation du véhicule et de préférence encore supérieure à 150°C et/ou d'être influencée par une zone d'une masse caoutchouteuse environnante susceptible d'atteindre de telles températures.

Selon un premier mode de réalisation du pneumatique selon l'invention, le système de mesure est noyé dans une partie de la bande de roulement. Selon le type de véhicule pour lequel est prévu le pneumatique, différentes zones de la bande de roulement peuvent être contrôlée. Par exemple dans le cas d'une motocyclette, il peut notamment être utile de faire une mesure de température au sommet du pneumatique, c'est-à-dire dans le plan équatorial du pneumatique. En effet cette zone de la bande de roulement peut par exemple être fortement sollicitée dans le cas de vitesses importantes en ligne droite pendant des temps importants. Dans un autre exemple, qui est celui des poids lourds, le système de mesure peut par exemple être noyé dans une partie des extrémités axialement extérieures de la bande de roulement, cette zone étant aussi appelée épaule du pneumatique. Il est effectivement connu de l'homme du métier que les épaules du pneumatique sont soumises à des sollicitations pouvant conduire à un échauffement des masses caoutchouteuses.

Selon un deuxième mode de réalisation du pneumatique selon l'invention, le système de mesure est noyé dans une partie d'un flanc. La mesure de la température dans une zone du flanc peut notamment apporter une information importante dans le cas des véhicules de type génie civil qui présente de fortes flexions en roulage qui viennent solliciter certaines zones des flancs.

Selon un troisième mode de réalisation du pneumatique selon l'invention, le système de mesure est noyé dans une partie d'un bourrelet. Une telle application peut notamment être intéressante dans le cas des véhicules de type agricole du fait notamment des fortes flexions subies par ces pneumatiques.

Selon une variante de réalisation de l'invention selon laquelle au moins deux systèmes de mesure de la température sans fil par technologie à onde acoustique de surface ou onde acoustique de volume comportant des antennes polarisées linéairement et étant noyés dans deux zones de masses caoutchouteuses du pneumatique susceptibles d'atteindre des températures supérieures à 100°C et/ou d'être influencée par des zones de masses caoutchouteuses environnantes susceptibles d'atteindre des températures supérieures à 100°C lors de l'utilisation du véhicule, les directions de polarisation des antennes forment entre elles un angle de 90° un angle compris entre 30 et 90°.

Comme énoncé précédemment une telle réalisation permet de sélectionner le système de mesure communiquant avec le dispositif d'interrogation, par exemple associé au véhicule, dans le cas de deux systèmes incorporés dans des zones de masses caoutchouteuses différentes.

Une telle réalisation d'un pneumatique selon l'invention peut être particulièrement intéressante dans le cas d'un véhicule de type motocyclette équipé de pneumatiques réalisés avec un taux de courbure le plus souvent supérieur à 0,2 pour être utilisé en carrossage. Les sollicitation exercées par exemple dans le plan équatorial de la bande de roulement et dans les parties axialement extérieures de la bande de roulement ne sont donc pas les mêmes puisque provoquées dans des conditions différentes. En effet, selon l'utilisation de la moto, soit en ligne droite, soit en courbe, la partie de la bande de roulement au contact du sol n'est pas la même et n'est pas sollicitée de la même manière. La mise en place de capteurs de température dans les différentes zones correspondantes, selon cette variante de réalisation de l'invention selon laquelle les directions de polarisation des antennes forment entre elles un angle compris entre 30 et 90°, autorise une surveillance en continu de ces différentes zones.

Le pneumatique ainsi proposé selon l'invention intègre au moins un système de mesure sans fil par technologie à onde acoustique de surface ou onde acoustique de volume de la température d'une zone d'une masse caoutchouteuse constitutive du pneumatique. Le système de mesure conformément à l'invention est mis en place dans une zone précise pour effectuer une mesure locale de la température, ladite zone étant connue pour être susceptible d'atteindre une température supérieure à 100°C et/ou d'être influencée par une zone environnante susceptible d'atteindre des températures supérieures à 100°C.

De façon à faciliter la mise en place du ou des systèmes de mesure de la température, le pneumatique selon l'invention est avantageusement réalisé selon une technique de fabrication du type sur noyau dur ou forme rigide telle qu'évoquée précédemment.

Un tel pneumatique qui comme énoncé précédemment est avantageusement réalisé selon une technique du type sur noyau dur ou toroïdal autorise notamment la mise en place des systèmes de mesure de la température dans une position quasi-finale, une étape de conformation n'étant pas requise selon ce type de procédé, ladite position finale pouvant en outre être parfaitement identifiée. En effet, la fabrication du type sur noyau dur peut permettre d'insérer un système de mesure de la température selon une indexation prédéterminée.

L'invention propose encore une utilisation d'un système de mesure de la température sans fil par technologie à onde acoustique de surface ou onde acoustique de volume, noyé dans une zone de la masse polymérique d'un élément de liaison au sol d'un véhicule, pour la mesure locale d'une température, ladite zone étant susceptible d'atteindre des températures supérieure à 100°C et/ou d'être influencée par une zone environnante susceptible d'atteindre des températures supérieures à 100°C, lorsque le véhicule est utilisé.

Selon un mode de réalisation préféré de l'invention, le système de mesure de la température est noyé dans une zone d'une masse polymérique susceptible d'atteindre des températures supérieures à 110°C lors de l'utilisation du véhicule et de préférence encore supérieure à 150°C et/ou d'être influencée par une zone d'une masse polymérique environnante susceptible d'atteindre de telles températures.

Selon une réalisation avantageuse de l'invention, l'utilisation du système de mesure se fait en noyant ledit système dans la masse polymérique d'un ensemble monté.

Selon un premier mode de réalisation de cette variante de l'invention, l'ensemble monté comprenant une roue et un pneumatique, l'utilisation du système de mesure se fait en noyant ledit système dans la masse polymérique d'une partie de la roue.

Selon un deuxième mode de réalisation de cette variante de l'invention, l'ensemble monté comprenant une roue et un pneumatique, l'utilisation du système de mesure se fait en noyant ledit système de mesure dans la masse caoutchouteuse d'une partie du pneumatique.

Selon un troisième mode de réalisation de cette variante de l'invention, l'ensemble monté comprenant une roue, un pneumatique et un organe de support du pneumatique pour une utilisation notamment en mode dégradé, l'utilisation du système de mesure se fait en noyant ledit système de mesure dans la masse polymérique de l'organe de support.

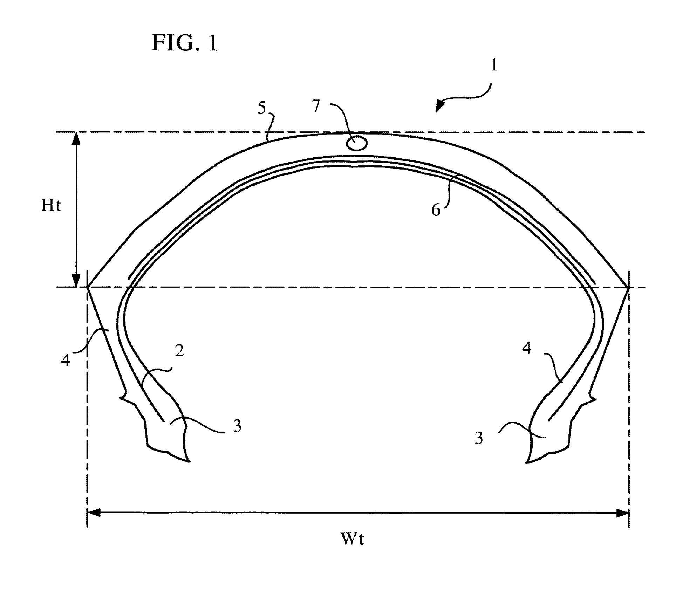

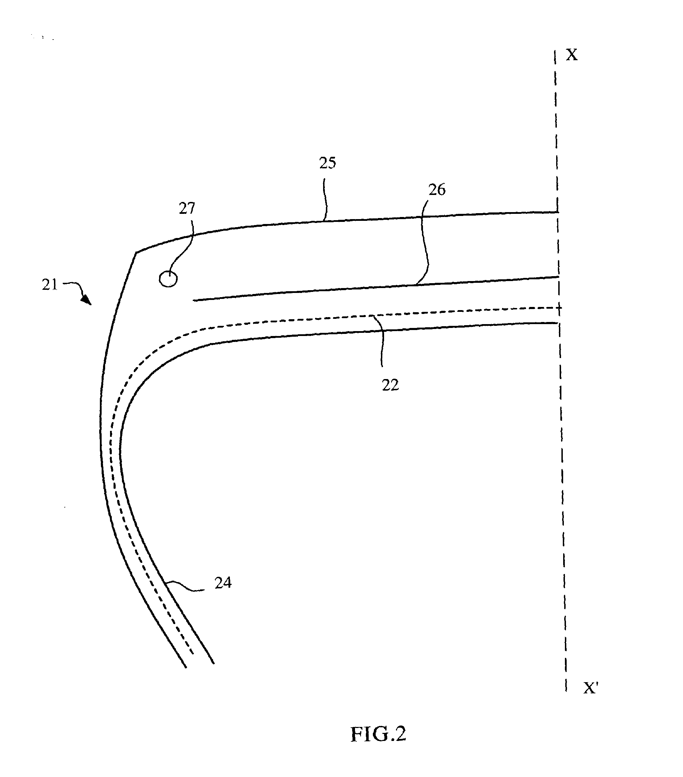

D'autres détails et caractéristiques avantageux de l'invention ressortiront ci-après de la description des exemples de réalisation de l'invention en référence aux figures 1 et 2 qui représentent :
- figure 1, une vue méridienne d'un schéma d'un pneumatique selon un premier mode de réalisation de l'invention,
- figure 2, une vue méridienne d'un schéma d'un pneumatique selon un deuxième mode de réalisation de l'invention,
- figure 3, une vue en plan et écorché de la bande de roulement d'un pneumatique.
Les figures 1 à 3 ne sont pas représentées à l'échelle pour en simplifier la compréhension.

La figure 1 représente un pneumatique 1 destiné à être utilisé sur un véhicule de type motocyclette comprenant une armature de carcasse constituée d'une seule couche 2 comprenant des éléments de renforcement de type textile. La couche 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

Ladite couche de carcasse 2 est ancrée de chaque côté du pneumatique 1 dans un bourrelet 3 dont la base est destinée à être montée sur un siège de jante. Chaque bourrelet 3 est prolongé radialement vers l'extérieur par un flanc 4, ledit flanc 4 rejoignant radialement vers l'extérieur la bande de roulement 5. Le pneumatique 1 ainsi constitué présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

Le pneumatique 1 comporte encore une armature de sommet 6, dont le détail n'est pas représenté sur la figure. L'armature de sommet peut comporter au moins une couche d'éléments de renforcement parallèles entre eux et faisant avec la direction circonférentielle des angles aigus et/ou une couche d'éléments de renforcement circonférentiels. Dans le cas de l'armature de sommet d'un pneumatique comportant au moins deux couches d'éléments de renforcement faisant avec la direction circonférentielle des angles aigus lesdits éléments de renforcement sont croisés d'une couche à la suivante en faisant entre eux des angles compris 40 et 100°.

Conformément à l'invention, le pneumatique comporte un système, 7 de mesure de la température interne de la masse caoutchouteuse de la bande de roulement 5. Ce système de mesure 7 est un capteur de température sans fil, de type résonateur SAW (Surface Acoustic Wave). Ce type de capteur présente l'avantage, comme expliqué précédemment, de ne pas nécessiter d'alimentation associée ; il renseigne sur la température de la masse caoutchouteuse qui l'entoure en modifiant une onde qu'il reçoit et retransmet.

Dans le cas de la figure 1, le capteur est placé dans le plan équatorial du pneumatique et va permettre de renseigner sur la température locale de la masse caoutchouteuse, c'est-à-dire sur la température de la masse caoutchouteuse directement au contact du capteur. La mise en place du capteur dans cette zone permet au conducteur ou pilote de la moto de surveiller ou d'être informé sur la température d'une zone susceptible de subir un emballement thermique notamment lors de roulage à grande vitesse en ligne droite.

Un dispositif interrogateur est avantageusement prévu sur le véhicule pour communiquer avec le capteur. Ledit dispositif interrogateur peut alors analyser le signal et transmettre les informations au pilote ou bien éventuellement agir directement sur le véhicule. Ledit dispositif peut par exemple être prévu pour envoyer un signal d'alerte avant qu'un phénomène d'emballement thermique ne se produise au vu de l'évolution de la température dans la zone considérée de la masse caoutchouteuse de la bande de roulement.

La figure 2 illustre un second mode de réalisation de l'invention plus particulièrement adapté au cas d'un véhicule de type poids lourd. La figure 2 ne représente qu'une vue partielle d'un demi pneumatique 21 qui se prolonge de manière symétrique par rapport à l'axe XX' qui représente le plan médian circonférentiel, ou plan équatorial, d'un pneumatique. Les zones basses et bourrelets du pneumatique 21 ne sont notamment pas représentés sur cette figure.

Sur cette figure 2, il a été choisi de noyer le capteur de type résonateur SAW dans une zone de la masse caoutchouteuse de la bande de roulement située au niveau axialement extérieure de la dite bande de roulement, usuellement appelée épaule du pneumatique. Il est en effet connu de l'homme du métier que ce type de pneumatique, notamment soumis à des charges importantes est amené à subir des contraintes qui dans des conditions extrêmes peuvent conduire à un emballement thermique de cette zone de la bande de roulement.

Les figures 1 et 2 ne représente qu'un seul système de mesure de la température au sein d'un pneumatique. Selon d'autres variantes de réalisation de l'invention, il peut être prévu une répartition d'au moins deux systèmes de mesure de la température au sein de deux zones de masses caoutchouteuses constitutives du pneumatique.

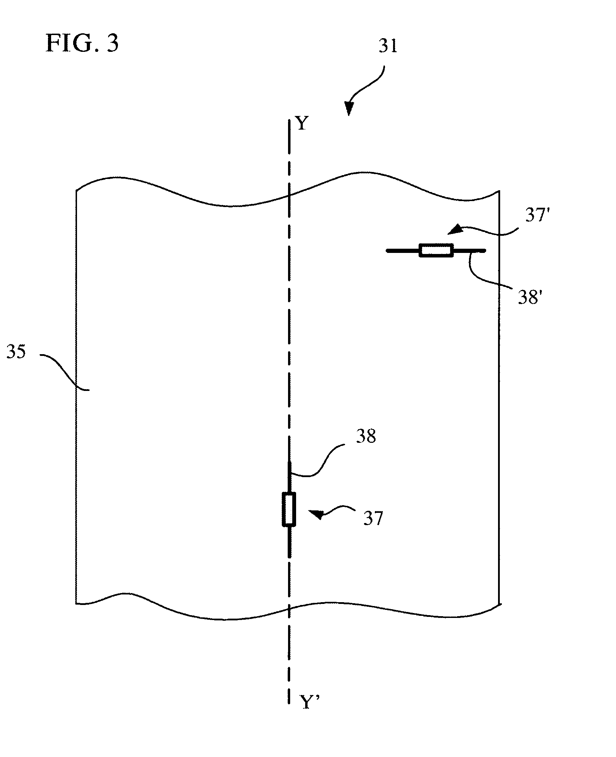

La figure 3 représente ainsi une vue en plan et en écorché de la bande de roulement 35 d'un pneumatique 31 de type motocyclette dans lequel au moins deux capteurs de mesure 37, 37' sont noyés dans des masses caoutchouteuses d'un pneumatique. Cette figure 3 peut par exemple être une représentation d'un pneumatique pour motocyclette.

Un premier capteur 37 de mesure de la température, de type résonateur SAW, est mis en place dans la zone du plan équatorial YY' du pneumatique 31 et permet comme expliquer dans le cas de la figure 1 de donner des informations quant à la température interne de la partie de la bande de roulement 35 au contact du sol lorsque la moto suit une trajectoire rectiligne.

Un deuxième capteur 37' de mesure de la température, de type résonateur SAW, est mis en place dans une partie axialement extérieure de la bande de roulement 35 du pneumatique 31 et permet de donner des informations quant à la température interne de ladite partie axialement extérieure de la bande de roulement 35 qui se trouve au contact du sol lorsque la moto suit une trajectoire en courbe, le pneumatique 31 étant alors utilisé en carrossage.

Les informations relatives à la température mesurées au sein de la bande de roulement par chacun des capteurs de type résonateur SAW sont transmises à un système d'interrogation, par exemple solidaire du véhicule. Comme il l'a déjà été dit précédemment les signaux émis par les capteurs de type résonateur SAW ou BAW ne permettent pas de sélectionner le capteur. Selon la représentation faite sur la figure 3, les directions de polarisation des antennes 38 et 38' de chacun des capteurs 37, 37' forment entres elles un angle sensiblement égal à 90°. Ces orientations différentes des antennes nécessitent de prévoir des systèmes complexes d'émission et de réception au niveau du dispositif prévu sur le véhicule pour permettre une communication avec chacun des capteurs résonateur SAW implantés dans le pneumatique. En effet, la réception des signaux de chacun des capteurs ne peut être assuré que par un couplage électromagnétique satisfaisant pour chacun de ces signaux réémis par chaque capteur avec un dispositif d'interrogation adapté.

## Revendications

1. Elément de la liaison au sol d'un véhicule constitué pour partie de masses polymériques, **caractérisé en ce qu'**au moins deux systèmes de mesure (37, 37') de la température sans fil par technologie à onde acoustique de surface ou onde acoustique de volume comportant des antennes (38, 38') polarisées linéairement sont noyés dans des zones de deux masses polymériques susceptibles d'atteindre des températures supérieures à 100°C et/ou d'être influencée par des zones de masses polymériques environnantes susceptibles d'attendre des températures supérieures à 100°C, lors de l'utilisation du véhicule et **en ce que** les directions de polarisation des antennes (38, 38') forment entre elles un angle compris entre 30 et 90°.

2. Elément de la liaison au sol d'un véhicule selon la revendication 1, constitutif d'un ensemble monté comprenant une roue et un pneumatique, **caractérisé en ce que** l'élément est une partie de la roue.

3. Elément de la liaison au sol d'un véhicule selon la revendication 1 constitutif d'un ensemble monté comprenant une roue et un pneumatique, **caractérisé en ce que** l'élément est une partie du pneumatique (1).

4. Elément de la liaison au sol d'un véhicule selon la revendication 1, constitutif d'un ensemble monté comprenant une roue, un pneumatique et un organe de support du pneumatique pour une utilisation notamment en mode dégradé, **caractérisé en ce que** l'élément est une partie de l'organe de support.

5. Pneumatique (1) comportant au moins une structure de renfort de type carcasse (2), formée d'éléments de renforcement, ancrée de chaque côté du pneumatique à un bourrelet (3) dont la base est destinée à être montée sur un siège de jante, chaque bourrelet se prolongeant radialement vers l'extérieur par un flanc (4), les flancs (4) rejoignant radialement vers l'extérieur une bande de roulement (5), les bourrelets (3), les flancs (4) et la bande de roulement (5) étant constitués pour partie de masses caoutchouteuses, **caractérisé en ce qu'**au moins deux systèmes de mesure (37, 37') de la température sans fil par technologie à onde acoustique de surface ou onde acoustique de volume comportant des antennes (38, 38') polarisées linéairement sont noyés dans des zones de deux masses caoutchouteuses susceptibles d'atteindre des températures supérieures à 100°C et/ou d'être influencée par des zones de masses caoutchouteuses environnantes susceptibles d'atteindre des températures supérieures à 100°C, lors de l'utilisation du véhicule et **en ce que** les directions de polarisation des antennes (38, 38') forment entre elles un angle compris entre 30 et 90°.

6. . Pneumatique (1) selon la revendication 5, **caractérisé en ce qu'**un système de mesure est noyé dans une partie de la bande de roulement (5).

7. Pneumatique (1) selon la revendication 6, **caractérisé en ce qu'**un système de mesure est noyé dans une partie des extrémités axialement extérieures de la bande de roulement (5).

8. Pneumatique (1) selon la revendication 5, **caractérisé en ce qu'**un système de mesure est noyé dans une partie d'un flanc (4).

9. Pneumatique (1) selon la revendication 5, **caractérisé en ce qu'**un système de mesure est noyé dans une partie d'un Bourrelet (3).

## Claims

1. A ground-contacting component of a vehicle, consisting partly of polymeric compounds, **characterized in that** at least two wireless temperature measurement systems (37, 37') based on surface acoustic wave or bulk acoustic wave technology comprising linearly polarized antennas (38, 38') are embedded in regions of two polymeric compounds liable to reach temperatures above 100°C and/or to be influenced by regions of surrounding polymeric compounds liable to reach temperatures above 100°C during use of the vehicle and **in that** the polarization directions of the antennas (38, 38') make between them an angle between 30 and 90°.

2. The ground-contacting component of a vehicle as claimed in claim 1, which is a constituent of a mounted assembly comprising a wheel and a tire, **characterized in that** the component is part of the wheel.

3. The ground-contacting component of a vehicle as claimed in claim 1, which is a constituent of a mounted assembly comprising a wheel and a tire, **characterized in that** the component is part of the tire (1).

4. The ground-contacting component of a vehicle as claimed in claim 1, which is a constituent of a mounted assembly comprising a wheel, a tire and a support member for supporting the tire in particular for use in degraded mode, **characterized in that** the component is part of the support member.

5. A tire (1) comprising at least one carcass reinforcement structure (2) formed from reinforcing elements and anchored on each side of the tire to a bead (3), the base of which is intended to be mounted on a rim seat, each bead being radially outwardly extended by a sidewall (4), the sidewalls (4) radially outwardly joining a tread (5), the beads (3), the sidewalls (4) and the tread (5) consisting partly of rubber compounds, **characterized in that** at least two wireless temperature measurement systems (37, 37') based on surface acoustic wave or bulk acoustic wave technology comprising linearly polarized antennas (38, 38') are embedded in regions of two rubber compounds liable to reach temperatures above 100°C and/or to be influenced by regions of surrounding rubber compounds liable to reach temperatures above 100°C during use of the vehicle and **in that** the polarization directions of the antennas (38, 38') make between them an angle between 30 and 90°.

6. The tire (1) as claimed in claim 5, **characterized in that** a measurement system is embedded in a part of the tread (5).

7. The tire (1) as claimed in claim 6, **characterized in that** a measurement system is embedded in a part of the axially outer ends of the tread (5).

8. The tire (1) as claimed in claim 5, **characterized in that** a measurement system is embedded in a part of a sidewall (4).

9. The tire (1) as claimed in claim 5, **characterized in that** a measurement system is embedded in a part of a bead (3).

## Patentansprüche

1. Bodenverbindungselement eines Fahrzeug, das zum Teil aus Polymermassen besteht, **dadurch gekennzeichnet, dass** mindestens zwei drahtlose Systeme (37, 37') zur Messung der Temperatur durch eine Technologie mit akustischer Oberflächenwelle oder akustischer Volumenwelle, die linear polarisierte Antennen (38, 38') aufweisen, in Zonen von zwei Polymermassen eingebettet sind, die bei der Benutzung des Fahrzeugs Temperaturen von mehr als 100°C ereichen und/oder von Zonen umgebender Polymermassen beeinflusst werden können, die Temperaturen von mehr als 100°C erreichen können, und dass die Polarisationsrichtungen der Antennen (38, 38') zueinander einen Winkel zwischen 30 und 90° bilden.

2. Bodenverbindungselement eines Fahrzeugs nach Anspruch 1, das Teil einer montierten Einheit ist, die ein Rad und einen Luftreifen enthält, **dadurch gekennzeichnet, dass** das Element ein Teil des Rads ist.

3. Bodenverbindungselement eines Fahrzeugs nach Anspruch 1, das Teil einer montierten Einheit ist, die ein Rad und einen Luftreifen enthält, **dadurch gekennzeichnet, dass** das Element ein Teil des Luftreifens (1) ist.

4. Bodenverbindungselement eines Fahrzeugs nach Anspruch 1, das Teil einer montierten Einheit ist, die ein Rad, einen Luftreifen und ein Stützorgan des Luftreifens für eine Verwendung insbesondere im Notlauf enthält, **dadurch gekennzeichnet, dass** das Element ein Teil des Stützorgans ist.

5. Luftreifen (1), der mindestens eine Verstärkungsstruktur vom Typ Karkasse (2) aufweist, die von Verstärkungselementen gebildet wird und zu beiden Seiten des Luftreifens an einem Wulst (3) verankert ist, dessen Basis dazu bestimmt ist, auf einen Felgensitz montiert zu werden, wobei jeder Wulst sich radial nach außen durch eine Flanke (4) verlängert, wobei die Flanken (4) radial nach außen an einen Laufstreifen (5) anschließen, wobei die Wülste (3), die Flanken (4) und der Laufstreifen (5) zum Teil aus Kautschukmassen bestehen, **dadurch gekennzeichnet, dass** mindestens zwei drahtlose Systeme (37, 37') zur Messung der Temperatur durch eine Technologie mit akustischer Oberflächenwelle oder akustischer Volumenwelle, die linear polarisierte Antennen (38, 38') aufweisen, in Zonen von zwei Kautschukmassen eingebettet sind, die bei der Benutzung des Fahrzeugs Temperaturen von mehr als 100°C ereichen und/oder von Zonen umgebender Kautschukmassen beeinflusst werden können, die Temperaturen von mehr als 100°C erreichen können, und dass die Polarisationsrichtungen der Antennen (38, 38') zueinander einen Winkel zwischen 30 und 90° bilden.

6. Luftreifen (1) nach Anspruch 5, **dadurch gekennzeichnet, dass** ein Meßsystem in einen Teil des Laufstreifens (5) eingebettet ist.

7. Luftreifen (1) nach Anspruch 6, **dadurch gekennzeichnet, dass** ein Meßsystem in einen Teil der axial äußeren Enden des Laufstreifens (5) eingebettet ist.

8. Luftreifen (1) nach Anspruch 5, **dadurch gekennzeichnet, dass** ein Meßsystem in einen Teil einer Flanke (4) eingebettet ist.

9. Luftreifen (1) nach Anspruch 5, **dadurch gekennzeichnet, dass** ein Meßsystem in einen Teil eines Wulsts (3) eingebettet ist.
